# DEMANDE DE BREVET EUROPEEN

(11) **EP 0 715 255 A1**
(43) Date de publication de la demande: **05.06.1996**
(21) Numéro de dépôt: 95410135.8
(22) Date de dépôt: 27.11.1995
(51) Int. Cl.: G06F 9/44, G06F 9/38

(54) **Processeur pipeline**

(30) Priorité: 28.11.1994 FR 9414478
(71) Demandeur: SGS-THOMSON MICROELECTRONICS S.A., F-94250 Gentilly (FR)
(72) Inventeur: Coulomb, Pierre, F-38190 Brignoud (FR)
(74) Mandataire: de Beaumont, Michel

(57) **Abrégé**

La présente invention concerne un processeur pipeline comprenant plusieurs circuits opérateurs (10, 16, 18) pour faire évoluer, par étapes affectées respectivement aux opérateurs, chaque instruction à exécuter d'un état initial vers un état exécutable. Il comprend une table mémoire (22) dont les emplacements reçoivent des instructions à une première étape d'évolution, fournies par un premier (10) des opérateurs, les autres opérateurs étant connectés à la table pour faire évoluer chaque instruction de la table dans son emplacement.

## Description

La présente invention concerne un processeur dit "pipeline", qui est un processeur comprenant plusieurs opérateurs pour faire évoluer chaque instruction à exécuter d'un état codé vers un état exécuté, ces opérateurs traitant simultanément des instructions respectives à des étapes successives de leur évolution.

Un processeur pipeline classique comprend une succession d'opérateurs dont chacun est précédé d'un registre de stockage d'une instruction en cours d'évolution. Normalement, à chaque cycle d'horloge, l'instruction en cours de traitement dans un registre est fournie à l'opérateur suivant, tandis que l'opérateur précédent fournit la prochaine instruction à traiter au registre. Toutefois, il est possible que des opérateurs prennent plus d'un cycle pour traiter une instruction, par exemple, lorsqu'un opérateur requiert un résultat qui n'est pas encore disponible. Dans une telle situation, le processus pipeline est bloqué et le retard ne peut être rattrapé.

L'article intitulé "An Experimental Single-Chip Data Flow CPU" de IEEE Journal of Solid-State Circuits, vol. 27, N° 1, Janvier 1992, décrit un processeur pipeline expérimental qui permet de rattraper des retards. Ceci est obtenu, notamment, en prévoyant dans le dernier opérateur, opérateur d'exécution, plusieurs modules d'exécution affectés à différents types d'instruction et qui peuvent exécuter des instructions simultanément. Pour chaque module d'exécution, les instructions sont mises en attente dans une mémoire tampon respective. Une instruction en attente est exécutée dès que cela est possible, même si ce n'est pas son tour ; les instructions sont exécutées dans un ordre différent de celui de leur arrivée au processeur.

Ce processeur expérimental est particulièrement efficace mais il est pour cela particulièrement complexe et consommateur d'énergie. En outre, la gestion des interruptions du processeur est délicate. En effet, comme les instructions sont exécutées dans le désordre, il est difficile, voire impossible, de déterminer l'état exact du microprocesseur lors de la survenue d'une interruption. En fait, on utilise un mécanisme "d'interruption imprécise" qui consiste à sauvegarder régulièrement l'état du processeur et, lorsque l'interruption survient, de considérer que l'état du processeur est approximativement celui de la dernière sauvegarde.

Un objet de la présente invention est de prévoir un processeur pipeline permettant un rattrapage de retards, qui soit de structure particulièrement simple.

Un autre objet de la présente invention est de prévoir un tel processeur ayant un mécanisme d'interruption précis.

Pour atteindre ces objets, la présente invention prévoit un processeur pipeline comprenant plusieurs circuits opérateurs pour faire évoluer, par étapes affectées respectivement aux opérateurs, chaque instruction à exécuter d'un état initial vers un état exécutable. Il comprend une table mémoire dont les emplacements reçoivent des instructions à une première étape d'évolution, fournies par un premier des opérateurs, les autres opérateurs étant connectés à la table pour faire évoluer chaque instruction de la table dans son emplacement.

Selon un mode de réalisation de la présente invention, chaque emplacement comprend un champ d'état d'instruction que chaque opérateur met à jour après avoir traité l'instruction de l'emplacement, pour indiquer à l'opérateur suivant de traiter l'instruction, le dernier opérateur mettant à jour ce champ avec un état vide indiquant au premier opérateur que l'emplacement est libre pour recevoir une nouvelle instruction.

Selon un mode de réalisation de la présente invention, chaque opérateur examine le champ d'état d'un emplacement et, lorsque ce champ indique un état correspondant à l'opérateur, traite l'instruction de l'emplacement et examine le champ d'état de l'emplacement suivant.

Selon un mode de réalisation de la présente invention, la table est une mémoire ayant un accès distinct par opérateur.

Selon un mode de réalisation de la présente invention, les opérateurs comprennent successivement un module de lecture dans une mémoire et de décodage, un module d'affectation d'opérandes cherchés dans des registres de travail, et au moins un module d'exécution.

Selon un mode de réalisation de la présente invention, chaque registre de travail a un champ de marquage que le module d'affectation d'opérandes marque du numéro de l'emplacement de la table lorsque l'instruction se trouvant dans cet emplacement fournit un résultat à stocker dans le registre, le module d'exécution fournissant le résultat avec le numéro d'emplacement identifiant le registre dans lequel ce résultat doit être stocké.

Selon un mode de réalisation de la présente invention, les registres forment une mémoire à accès par le contenu des champs de marquage.

Selon un mode de réalisation de la présente invention, le module d'exécution efface le marquage d'un registre de travail lorsqu'il fournit un résultat à celui-ci, de manière que la présence ou l'absence de marquage indique au module d'affectation d'opérandes que le contenu du registre est ou non valide.

Selon un mode de réalisation de la présente invention, le module d'exécution met le champ d'état d'un emplacement de la table à un état d'attente pendant qu'il exécute l'instruction qui se trouvait dans cet emplacement, et à l'état vide au moment où l'exécution se termine.

Ces objets, caractéristiques et avantages ainsi que d'autres de la présente invention seront exposés plus en détail dans la description suivante de modes de réalisation particuliers, faite à titre non-limitatif à l'aide des figures jointes parmi lesquelles :
la figure 1 représente schématiquement et partiellement un mode de réalisation de processeur pipeline selon la présente invention ; et
la figure 2 représente, à l'aide d'un exemple, le traitement d'une série d'instructions par un processeur selon la présente invention.

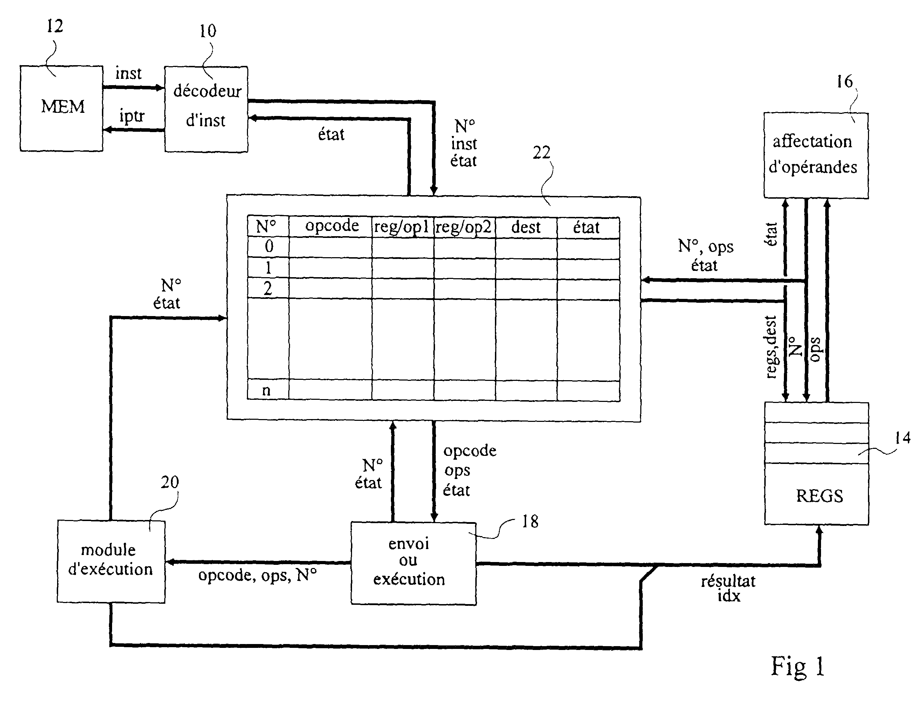

A la figure 1, un processeur selon l'invention comprend, par exemple, trois opérateurs de traitement pipeline. Un opérateur 10 est un module qui cherche les instructions successives dans une mémoire 12 et les décode. En effet, les instructions sont souvent stockées en mémoire sous une forme comprimée pour gagner de la place. Les instructions décodées par le module 10 comprennent de façon générale un champ de code d'opération (opcode) qui identifie le type d'opération à effectuer, deux identificateurs d'opérande qui correspondent à des registres de travail 14, et une destination du résultat de l'opération (un registre de travail ou une adresse de la mémoire 12).

Un deuxième opérateur est un module d'affectation d'opérandes 16. Ce module 16 sert à remplacer les identificateurs des registres de travail par les valeurs (opérandes) contenues dans ces registres.

Le troisième opérateur est un module d'exécution 18 qui reçoit chaque instruction sous forme exécutable (code d'opération et opérandes) et l'exécute directement, ou bien, éventuellement, l'envoie à exécuter dans un module d'exécution spécialisé 20 destiné à traiter des instructions complexes. Le module 18 exécute, par exemple, des instructions d'accès à la mémoire 12 pour échanger des données entre cette mémoire et les registres 14, et le module 20 exécute des opérations mathématiques ou logiques.

Selon la présente invention, les opérateurs sont reliés à une table 22 qui stocke dans ses emplacements une succession d'instructions en cours de traitement. Chaque instruction dans la table 22 est affectée à un emplacement où elle reste tandis que les opérateurs successifs la modifient à tour de rôle pour faire évoluer l'instruction vers un état exploitable par le dernier opérateur (le module d'exécution 18 ou 20).

Les emplacements de la table 22 sont affectés de numéros respectifs (adresses), 0 à n dans la figure 1. Chaque emplacement comporte un champ de code d'opération, deux champs d'opérande, un champ de destination, et un champ d'état indiquant l'étape d'évolution à laquelle se trouve l'instruction de l'emplacement.

La table 22 est une mémoire à accès simultané par tous les opérateurs. Le fait de prévoir une mémoire 22 à accès multiples n'est pas une solution à gestion complexe dans le présent cas car les opérateurs n'accèdent jamais simultanément à une même donnée. En outre, les opérateurs n'accèdent qu'à des parties d'emplacement, ce qui réduit le nombre de lignes d'accès.

Initialement, tous les opérateurs sont prêts à accéder au premier emplacement vide, par exemple l'emplacement 0, en fournissant le numéro 0 sur des bus d'adresses respectifs. Chacun des opérateurs reçoit et analyse le champ d'état de l'emplacement 0 sélectionné.

L'état de l'emplacement est "vide", ce qui active le module de décodage 10. Celui-ci lit dans la mémoire 12 une instruction indiquée par un pointeur d'instruction iptr. Le module 10 décode cette instruction et fournit aux premiers champs de l'emplacement 0 le code d'opération, le cas échéant un ou deux identificateurs de registre, et une destination. L'opérateur 10 remplace l'état "vide" de l'emplacement 0 par l'état "décodé".

Au cycle d'horloge suivant, l'opérateur 10 sélectionne l'emplacement 1 pour analyser son champ d'état et recommencer les opérations précédemment décrites si ce champ est à l'état "vide".

L'état "décodé" de l'emplacement 0 active le module d'affectation d'opérandes 16. Si les champs d'opérande de l'emplacement 0 contiennent des identificateurs de registre, ceux-ci sont transmis à l'opérateur 16 qui récupère les valeurs (opérandes) contenues dans les registres correspondants et les écrit dans les champs d'opérande de l'emplacement 0 à la place des identificateurs de registre. L'opérateur 16 remplace l'état "décodé" de l'emplacement 0 par l'état "opérandes cherchés".

Au cycle suivant, l'opérateur 16 sélectionne l'emplacement 1 pour analyser son champ d'état et recommencer les opérations qui viennent d'être décrites si ce champ est à l'état "décodé".

L'état "opérandes cherchés" de l'emplacement 0 active le module d'exécution 18 qui lit le code d'opération et les opérandes pour exécuter l'instruction correspondante ou bien, si l'instruction est complexe, l'envoyer au module d'exécution spécialisé 20.

Au cycle d'instruction suivant, le module d'exécution 18 sélectionne l'emplacement 1 et analyse son champ d'état. Si celui-ci est à l'état "opérandes cherchés", l'instruction est traitée comme cela vient d'être décrit.

Au moment où le module 18 ou 20 se met à exécuter une instruction, l'état de l'emplacement correspondant pourrait être affecté de "vide". Toutefois, si l'exécution de l'instruction provoque une interruption, la localisation de cette intruction n'est pas facile.

De préférence, pour faciliter la localisation d'une instruction ayant provoqué une interruption, l'opérateur 18 met l'emplacement correspondant à l'instruction en cours d'exécution à l'état "d'attente". Cet état "d'attente" est remplacé par l'état "vide" dès que l'exécution de l'instruction se termine avec succès. Si l'exécution de l'instruction provoque une interruption, cette instruction est tout simplement celle correspondant à l'emplacement en "attente".

En tout cas, le traitement d'interruptions est aisé car les instructions sont exécutés dans l'ordre de leur arrivée au processeur.

Les opérateurs agissent de manière circulaire sur le tableau 22, c'est-à-dire que quand un opérateur a traité le dernier emplacement de la table, il sélectionne le premier emplacement.

Selon un mode de réalisation, on utilise un mécanisme particulier pour fournir les résultats des instructions aux registres de travail correspondants 14. Lorsque le module d'affectation d'opérandes 16 est activé, et si le champ de destination de l'emplacement contient un identificateur de registre, ce registre est marqué du numéro de l'emplacement. Pour cela, les registres 14 ont des champs de marquage et sont accessibles par les contenus de ces champs. Lorsque le module 18 ou 20 fournit au registre 14 le résultat d'une instruction, il fournit également le numéro de l'emplacement correspondant, qui sélectionne le registre dont le champ de marquage contient ce numéro. Ce mécanisme s'avère être particulièrement simple pour écrire les résultats dans les registres 14.

Par ailleurs, au moment où le module d'affectation d'opérandes 16 récupère des valeurs dans les registres 14, ces valeurs doivent être des valeurs qui ont été mises à jour. Pour éviter la récupération de valeurs non mises à jour, dès qu'un résultat est produit par l'opérateur 18 ou 20, le registre dans lequel il est stocké est marqué par un état "valide". Ainsi, l'opérateur 16 vérifie le marquage d'un registre et attend qu'il soit "valide" avant de récupérer la valeur. Avec le mécanisme décrit ci-dessus, le marquage "valide" est simplement l'absence d'un marquage par un numéro d'emplacement.

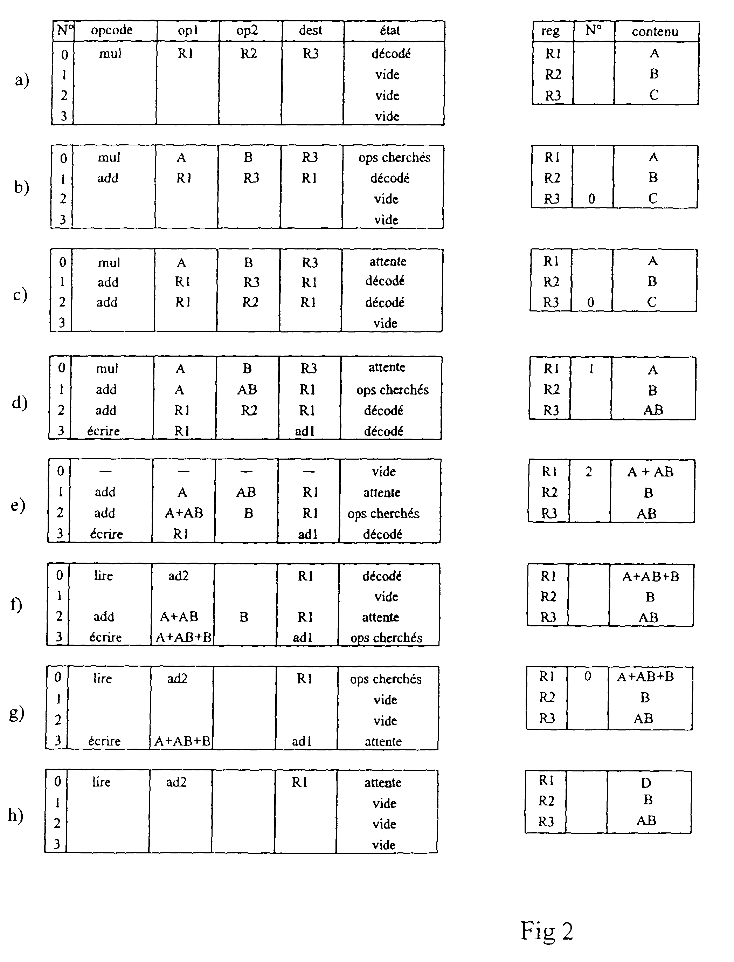

La figure 2, servant à illustrer comment le processeur selon l'invention permet de rattraper des retards, représente plusieurs étapes d'évolution du contenu de la table 22 lors du traitement d'un exemple de succession d'instructions. Les étapes sont numérotées a) à h) et correspondent à des cycles d'horloge successifs. A côté des contenus des tables, on a représenté les contenus correspondants de trois registres de travail R1 à R3.

Au cycle a), l'emplacement 0 reçoit du module de décodage 10 une instruction de multiplication des contenus des registres R1 et R2, le résultat étant à placer dans le registre R3. L'emplacement 0 est à l'état "décodé" et les autres emplacements sont à l'état "vide". Les registres R1 à R3 contiennent des valeurs respectives A, B et C.

Au cycle b), le module d'affectation d'opérandes 16 remplace, dans l'emplacement 0, les identificateurs des registres R1 et R2 par les valeurs A et B contenues dans ces registres. L'emplacement 0 est mis à l'état "opérandes cherchés" et le numéro 0 de cet emplacement marque le registre destination R3 qui doit recevoir le résultat de la multiplication.

En même temps, l'emplacement 1 reçoit du module de décodage 10 une instruction d'addition des contenus des registres R1 et R3, le résultat étant à placer dans le registre R1. L'emplacement 1 est mis à l'état "décodé".

Au cycle c), l'instruction de l'emplacement 0 (multiplication de A par B) est transmise au module d'exécution 20 par l'intermédiaire du module 18 et l'emplacement 0 est mis à l'état "d'attente". La multiplication, étant relativement complexe, prend, par exemple, deux cycles. Ainsi, au cycle c), le contenu du registre destination R3 n'est pas modifié.

L'instruction d'addition de l'emplacement 1, qui a été décodée au cycle b), ne peut encore être traitée par le module d'affectation d'opérandes 16 car l'un de ses opérandes est la valeur non encore mise à jour du registre R3, ce qui est indiqué par le fait que le registre R3 est marqué (du numéro 0).

Le module de décodage 10 fournit à l'emplacement 2 une instruction d'addition des contenus des registres R1 et R2, le résultat étant à placer dans le registre R1. L'emplacement 2 est mis à l'état "décodé".

Au cycle d), le module d'exécution 20 fournit le résultat de la multiplication de l'emplacement 0 au registre R3. Le marquage 0 de ce registre R3 est effacé, ce qui indique au module d'affectation d'opérandes 16 que le contenu de ce registre R3 est valide. Ainsi, les identificateurs des registres R1 et R3 de l'emplacement 1 sont aussitôt remplacés par les valeurs correspondantes A et AB. L'emplacement 1 est mis à l'état "d'opérandes cherchés" et le registre R1 est marqué du numéro 1 pour indiquer que ce registre va recevoir le résultat de l'addition de l'emplacement 1.

L'instruction de l'emplacement 2 n'est pas modifiée par rapport à son état du cycle c), car elle requiert un opérande, le contenu du registre R1, qui n'est pas encore valide.

Le module de décodage 10 fournit à l'emplacement 3 une instruction de transfert du contenu du registre R1 à une adresse ad1. L'emplacement 3 est mis à l'état "décodé".

Au cycle e), la multiplication de l'emplacement 0 étant achevée, cet emplacement est mis à l'état "vide" par le module d'exécution 20.

Les emplacements de la table 22 sont utilisés circulairement et, en principe, le module de décodage 10 écrit immédiatement une nouvelle instruction dans l'emplacement 0. Toutefois, on suppose ici que le décodage de l'instruction suivante prend un cycle supplémentaire, donc aucune instruction n'est écrite dans l'emplacement 0 au cycle e).

L'instruction d'addition de l'emplacement 1 est envoyée au module d'exécution 20. Cet emplacement 1 est mis à l'état "d'attente". Le résultat A+AB est écrit dans le registre R1 et le marquage 1 de ce registre est effacé.

Dans l'emplacement 2, les identificateurs des registres R1 et R2 sont remplacés par les contenus valides A+AB et B de ces registres. L'emplacement 2 est mis à l'état "d'opérandes cherchés" et le registre R1 est marqué du numéro 2 car ce registre R1 reçoit le résultat de l'addition de l'emplacement 2.

L'instruction de transfert de l'emplacement 3 n'est pas modifiée par rapport à son état du cycle d) car elle requiert un opérande, le contenu du registre R1, qui n'est pas encore valide (ce qui est indiqué par le fait que ce registre R1 est marqué).

Au cycle f), l'addition de l'emplacement 2 est envoyée au module d'exécution 20 qui écrit le résultat A+AB+B dans le registre R1. Le marquage 2 de ce registre est effacé. Ainsi, l'opérande requis par l'instruction d'écriture de l'emplacement 3 est disponible et fourni à l'emplacement 3 par le module d'affectation d'opérandes 16.

En même temps, le module de décodage 10 fournit à l'emplacement 0 une instruction de transfert du contenu d'une adresse ad2 dans le registre R1.

Dans ce cycle f), le retard d'exécution de l'instruction de multiplication au cycle c), est rattrapé grâce au retard de décodage de l'instruction de l'emplacement 0. Ce rattrapage peut être constaté par le fait que les instructions de la table sont toutes à des étapes d'évolution différentes. Ce rattrapage est justement permis grâce au fait que la table peut contenir plusieurs instructions à une même étape d'évolution sans bloquer le processus.

Au cycle g), l'instruction de transfert de l'emplacement 3 est envoyée au module d'exécution 18. Le registre R1 est marqué du numéro 0 car le résultat de l'instruction de transfert de l'emplacement 0 est à stocker dans ce registre.

Au cycle h), l'instruction de transfert de l'emplacement 0 est envoyée au module d'exécution 18 qui cherche une valeur D en mémoire et l'écrit dans le registre R1. Le marquage 0 de ce registre est effacé.

Les instructions de saut sont traitées par le module de décodage 10 et ne sont pas introduites dans la table 22. Le traitement d'une instruction de saut consiste simplement à modifier le pointeur d'instruction iptr pour chercher l'instruction suivante à exécuter. Cette modification prend au moins un cycle d'horloge ; c'est une des raisons pour laquelle une instruction peut être retardée d'un cycle avant d'être décodée et introduite dans la table. Des retards dus à des instructions de saut sont en fait des faux retards qui permettent avantageusement de rattraper des retards d'affectation d'opérandes ou d'exécution comme le montre l'exemple de la figure 2.

Le nombre d'emplacements de la table 22 est choisi égal au nombre d'étapes de traitement des instructions augmenté du nombre de cycles de retard que l'on souhaite pouvoir rattraper.

La présente invention a été décrite en relation avec un processeur pipeline à trois étapes, mais ce nombre d'étapes, peut être quelconque.

## Revendications

1. Processeur pipeline comprenant plusieurs circuits opérateurs (10, 16, 18) pour faire évoluer, par étapes affectées respectivement aux opérateurs, chaque instruction à exécuter d'un état initial vers un état exécutable, caractérisé en ce qu'il comprend une table mémoire (22) dont les emplacements reçoivent des instructions à une première étape d'évolution, fournies par un premier (10) des opérateurs, les autres opérateurs étant connectés à la table pour faire évoluer chaque instruction de la table dans son emplacement.

2. Processeur selon la revendication 1, caractérisé en ce que chaque emplacement comprend un champ d'état d'instruction que chaque opérateur met à jour après avoir traité l'instruction de l'emplacement, pour indiquer à l'opérateur suivant de traiter l'instruction, le dernier opérateur mettant à jour ce champ avec un état vide indiquant au premier opérateur que l'emplacement est libre pour recevoir une nouvelle instruction.

3. Processeur selon la revendication 2, caractérisé en ce que chaque opérateur examine le champ d'état d'un emplacement et, lorsque ce champ indique un état correspondant à l'opérateur, traite l'instruction de l'emplacement et examine le champ d'état de l'emplacement suivant.

4. Processeur selon la revendication 1, caractérisé en ce que la table (22) est une mémoire ayant un accès distinct par opérateur.

5. Processeur selon la revendication 2, caractérisé en ce que les opérateurs comprennent successivement un module (10) de lecture dans une mémoire (12) et de décodage, un module (16) d'affectation d'opérandes cherchés dans des registres de travail (14), et au moins un module d'exécution (18, 20).

6. Processeur selon la revendication 5, caractérisé en ce que chaque registre de travail a un champ de marquage que le module d'affectation d'opérandes marque du numéro de l'emplacement de la table lorsque l'instruction se trouvant dans cet emplacement fournit un résultat à stocker dans le registre, le module d'exécution (18, 20) fournissant le résultat avec le numéro d'emplacement identifiant le registre dans lequel ce résultat doit être stocké.

7. Processeur selon la revendication 6, caractérisé en ce que les registres forment une mémoire à accès par le contenu des champs de marquage.

8. Processeur selon la revendication 6, caractérisé en ce que le module d'exécution (18, 19) efface le marquage d'un registre de travail lorsqu'il fournit un résultat à celui-ci, de manière que la présence ou l'absence de marquage indique au module d'affectation d'opérandes (16) que le contenu du registre est ou non valide.

9. Processeur selon la revendication 6, caractérisé en ce que le module d'exécution (18, 19) met le champ d'état d'un emplacement de la table à un état d'attente pendant qu'il exécute l'instruction qui se trouvait dans cet emplacement, et à l'état vide au moment où l'exécution se termine.
